**Europäisches Patentamt**

(19) **European Patent Office**

**Office européen des brevets**

(11) Publication number : **0 372 121 B1**

(12) **EUROPEAN PATENT SPECIFICATION**

(45) Date of publication of patent specification :
04.03.92 Bulletin 92/10

(51) Int. Cl.⁵ : **G01N 27/28,** G01N 27/416,
G01N 27/38

(21) Application number : **88202757.6**

(22) Date of filing : **02.12.88**

(54) **Device for retaining an electrode holder.**

(43) Date of publication of application :
**13.06.90 Bulletin 90/24**

(45) Publication of the grant of the patent :
**04.03.92 Bulletin 92/10**

(84) Designated Contracting States :
**BE CH DE FR GB IT LI LU NL**

(56) References cited :
**EP-A- 0 271 764
DE-A- 3 118 771
DE-A- 3 525 401
DE-U- 8 706 309**

(73) Proprietor : **Yokogawa Europe B.V.
Radiumweg 30
NL-3812 RA Amersfoort (NL)**

(72) Inventor : **Tesson, Adelbert Hermanus
Reigerstraat 32
NL-3816 AX Amersfoort (NL)**

(74) Representative : **de Wit, Gerard Frederik, Ir. et
al
Octrooi- en Merkenbureau De Wit B.V.
Breitnerlaan 146
NL-2596 HG Den Haag (NL)**

## Description

The invention relates to a device as described in the first part of claim 1.

Such a device is known from the European Patent Application EP-A-0 271 764.

This device has the advantage, that in the withdrawn position the electrode can be contacted with a sterilization agent or standard liquids. It has, however, a plurality of disadvantages, which are indicated in the following.

The known device is provided with considerably more sealing means than are mentioned in the above, which for instance serve the purpose to pneumatically displace the electrode holder with respect to the bore. These sealing means are subjected to the action of the pressurized air and have to be somewhat leaky to this pressurized air so that the latter can leak from the inside to the outside to exclude liquid movement in the opposite direction.

Apart from the fact, that a somewhat leaky seal, which for obtaining the leaking action may be provided with small slits, is insufficiently accessible to reach micro-organisms already present in the seal with for instance a sterilization agent, several seals are not at all reachable for a sterilization treatment.

This forms an impediment for the known device with so-called sanitary applications, which are subjected to high hygienic requirements. Therewith it is especially important that not only micro-organisms cannot attain from the outside the process vessel, in which the electrode is active, but also that a high guarantee can be given that no micro-organisms present in a batch in said vessel can be transferred to the next batch.

With the known device, when in the measuring position, during the movement from the measuring position to the withdrawn position and after the closing cap has formed a seal by means of the forward sealing member, the space in which the measuring part of the electrode is located, is in connection with the connection ducts. This means contact of the process liquid with these ducts in the measuring position and during the movement from the measuring position towards the withdrawn position. Therewith by means of pressurized air it is looked for it that the latter during the considered movement forms an air bubble, which eventually comes into the process liquid, but also this can lead to undesirable consequences, for instance if no oxygen may be added to the process liquid and/or the sterility of the pressurized air cannot be guarantied under all circumstances.

In the withdrawn position the sluice chamber is permanently connected to the connection ducts. By reason hereof is not only the sluice chamber not locked, which can mean a disturbance with measurements of a sample of the process liquid, but moreover the connection ducts are in open connection with the space outside the process vessel if the electrode has been removed. This requires precautions to prevent occurrence of a streaming movement between the connection ducts and the whole in which the electrode was mounted, which could induce pressure on the electrode after unscrewing it. This forms of course a danger for the device and the personnel operating it.

The invention aims to maintain the indicated advantages, to eliminate the indicated disadvantages and to provide a more reliable device which gives a higher guarantee to prevent transfer of micro-organisms from a first batch in which the electrode is active into a second batch and allows for electrode exchange without process interruption, as well as allowing standardization and sterilization of the electrode, the connection between the connection ducts and the vessel remaining closed under all circumstances.

According the invention these aims are attained with the features indicated in the characterizing parts of claim 1.

It is remarked that from DE-U-8 706 309 a device for retaining an electrode holder is known, in which an active and a gauging position are obtained by shifting the measuring member. The intermediate position of the invention, which is important for obtaining the high hygienic standard of the invention, lacks completely, whereas also the shifting members have not been carried out in such a way that survival of bacteria is adequately countered.

With the invention in the intermediate position the room enclosing the measuring part of the electrode is closed, so that a sample can be taken without any volume fault, which sample can, if desired, be completely readded to the process liquid without having been in contact with any duct or substances therein. Also the electrode can be exchanged without danger of a connection between the connection ducts and the surroundings. This can for instance be carried out by putting the device into the intermediate position and then exchange the electrode. In that instance the electrode is not sterilized before being removed and it is with for instance an oblique orientation of the axis of the electrode not well possible to prevent that surrounding air contacts the process liquid. A sanitairy exchange is possible by supplying sterilization liquid via the connection ducts during the movement of the device from the measuring position into the withdrawn position and if desired, let it stream. If afterwards the device is brought into the intermediate position the electrode is sterilized and only sterilization liquid is in the sluice chamber. Then the electrode can be exchanged, wherewith also the new mounted electrode first will engage the sterilization liquid. If one wants to prevent that sterilization liquid is mixed with process liquid then the device can firstly again be put into the withdrawn position and afterwards the electrode rinsed.

With this way of handling it is prevented that still living micro-organisms can be brought to the outside and that micro-organisms from the outside can come into the process liquid.

If one wants to exchange also the contents of the process vessel than one can first, when the device is in the measuring position, supply sterilization liquid to the connection ducts, after this put the device into the withdrawn position, if necessary exchange the electrode in the intermediate position, when suppling sterilization liquid to the connection ducts reput the device in the measuring position and then subject the protruding part of the device in the process vessel to a sterilization treatment. If one handles in this way the intermediate sealing member firstly moves over a sterilized surface of the bore, but the forward sealing member will engage parts of the bore contacted by the process liquid. If once the intermediate position is passed by the sterilization agent can engage the forward sealing member at the side diverted from the process vessel, after which the latter can be shifted into the other direction and leave behind a sterilized bore wall, after which after passing the intermediate position the intermediate sealing member engages sterile parts of the bore, provided that after passing of the intermediate position sterilization agent is supplied to the process vessel.

In this way as well the forward sealing member as the intermediate sealing member are severely subjected to sterilization activities and the possibility is excluded that micro-organisms of the first batch will reach a second batch. Moreover one has with the invention always the possibility of applying sterilizaton agent at the process side of the sealing member, so that no micro-organisms can reach the surrounding or from the surrounding the process vessel via this member.

According to a preferred embodiment of the invention the desired shape of the bore surface respectively that of the electrode holder is obtained by applying the features indicated in claim 2.

According to another further elaboration of the invention it is preferably provided, that in the work position the intermediate sealing member is located at the end of the bore, which in that position is directed towards the closing cap. This means that immediately after passing the intermediate position the sluice chamber is connected with the space which is connected to the connection ducts.

According to still a further elaboration of the invention the features indicated in claim 4 are provided. By reason of these features it is attained, that in the measuring position the intermediate sealing member is at the mouth of the bore and the process vessel and in the intermediate position the back sealing member takes that position.

In order to enable an easy sterilization of the forward sealing member and the intermediate sealing member preferably the features indicated in claims 5 and/or 6 are applied.

Finally it is advantageous to prevent in the work or measuring position that recesses or corners are present, in which micro-organisms could accumulate. This can be obtained with the feature of claim 7. This feature is especially useful in case the organ containing the vessel side of the bore is carried out in the way indicated in the Dutch Patent Application 8802523. In that instance the surface has hardly any irregularities, so that no hiding places for micro-organisms are available.

The invention in the following is further elucidated by means of the drawing, in which:

Figure 1 shows a device according to the invention in the work position with protruding electrode;

Figure 2 shows the same device in the intermediate position; and

Figure 3 shows the same device in the withdrawn position, in which sterilization or standardization is possible.

In the drawing with reference 1 the head or measuring part of an electrode is indicated. An electrode holder 3 supports by means of strips 4 a cap 5 with a forward sealing member 6. The electrode holder 3 has a back sealing member 7 and an intermediate sealing member 8.

The electrode holder 3 has a sleeve with at its back side a part with internal screw thread 15 of larger diameter than a cylindrical part with a thick wall 9 and beyond the back sealing member 7 a cylindrical part 10 with a wall of small thickness, which at its end is provided with a shoulder 11. Against the shoulder 11 lies a gasket 12 on which an internal sleeve 13 can exert an axial force to press him against the electrode 2 in order to form therewith a seal and to retain the electrode in the sleeve 9,10. At the back side a pressure ring 14 acts on the internal sleeve 13, which ring can be pressed by means of a not shown gland cooperating with the screw thread 15 at the back side of the sleeve.

The electrode holder 3 is located in a sleeve, which consists of two organs 16 and 17, which by means of a mounting nut 18 are connected to each other, wherewith a gasket 19 provides a seal. The sleeve consisting of the organs 16 and 17 has first a cylindrical inner wall 20 with a first diameter, then via tapered wall parts a cylindrical part 21 with a larger diameter and after this again a cylindrical part 22 with the same diameter as the part 20. In the part 21 with the larger diameter connection ducts 23 and 24 debouch.

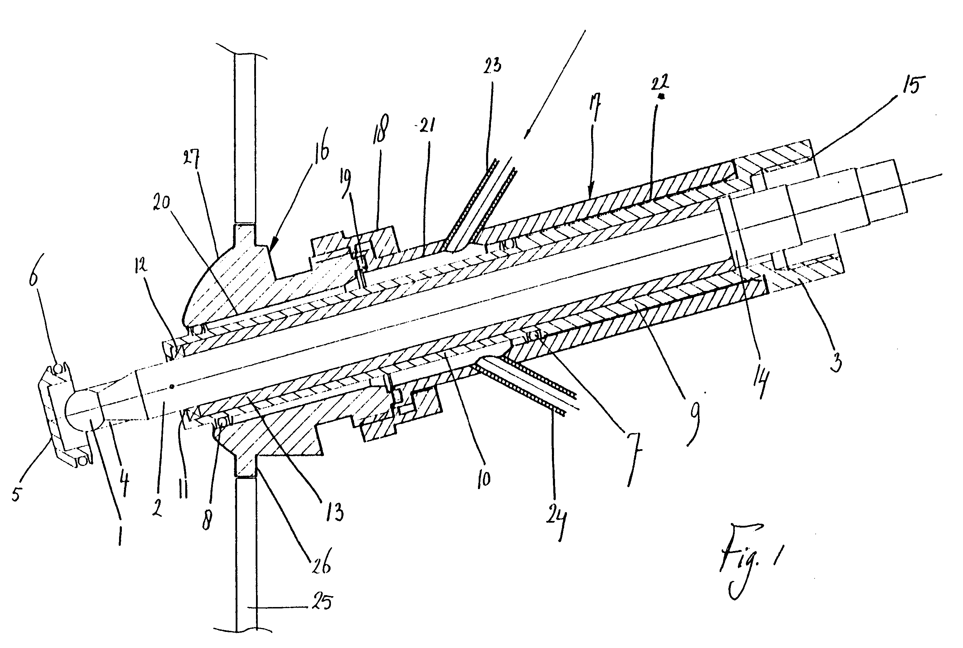

In the in fig. 1 shown work position the head or measuring part 1 of the electrode protrudes into the liquid which is contained in a reaction vessel limited by the wall 25. This wall is welded to a weld flange 26, which is part of the sleeve organ 16, it being clear that in the wall 25 only a perpendicular hole has to be made and that also welding in an oblique position is not necessary. At the inner side of the vessel the organ 16 has a spherical shape 27. In the work position shown in fig. 1 the outside of the part 27 is by means of the seal 8 sealed from the cylindrical space between the wall parts 20 and 21 and the sleeve organ 16 respectively 17. In this position it is possible to supply via the ducts 23 and 24 a sterilization agent, for instance steam, so that the inner wall of the organ 16 can be sterilized without disturbing the activity of the electrode or to be obliged to shut down the process. If then later the sealing member 8 can be shifted along this wall, the latter does not bear vived micro-organisms, which after passing by of the sealing member would contact the liquid in the vessel delimited by the wall 25.

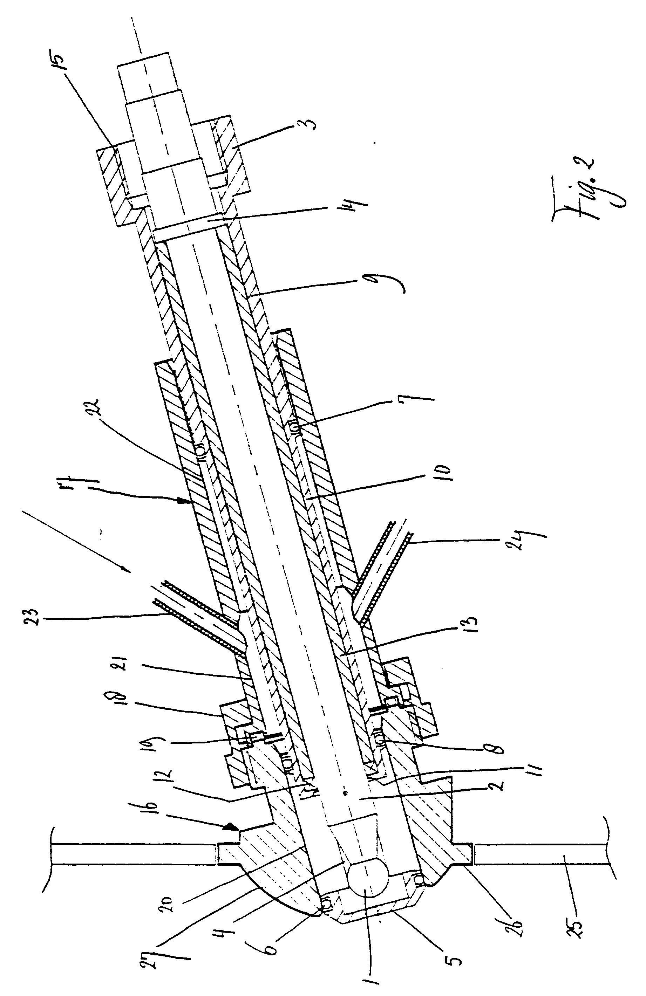

In the position of fig. 2 the forward sealing member 6 forms a seal with the bore 20 of the organ 16. The wall part between the sealing members 6 and 8 can therewith not contain other micro-organisms as already were present in the process liquid.

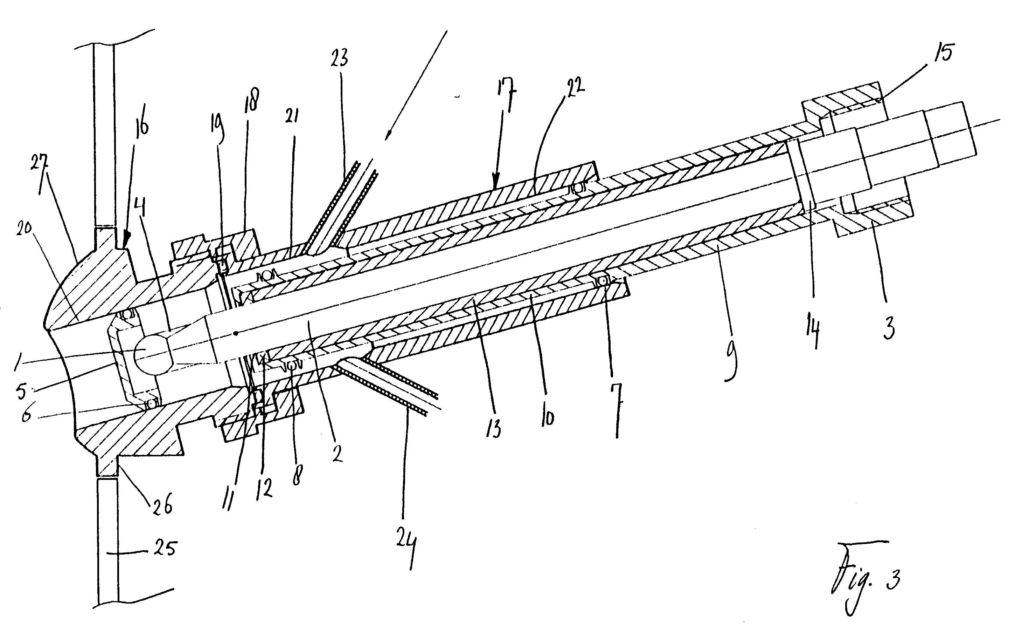

In the withdrawn position shown in fig. 3 the forward sealing member 6 is further shifted inwardly and the intermediate sealing member 8 lies now opposite the enlarged bore wall part 21. By reason of this the measuring part 1 of the electrode is located in a space, which is connected with the connection ducts 23 and 24, by reason of which sterilization or standardization is possible.

Because the concerned processes, for instance fermentation processes, may have a very long duration by reason of which the electrodes may become unreliable, it may be desired to replace an electrode during a process step. This easily can be done in the position of fig. 3 especially when a standardization has shown that the electrode does not indicate the right value. By unscrewing the now shown gland which cooperates with the screw thread 15 the electrode can be taken out of the sleeve 3 and a new electrode can be mounted, which by fastening of the not shown gland in the screw thread 15 is fixed. It is now possible to sterilize the electrode and the concerned part of the inner wall of the organ 16. When shifting afterwards the electrode outwardly until in the position of fig. 2, in which the sealing member 8 provides a seal with respect to the organ 16, the connection between the sterilization agent supply and the electrode is interrupted. Shortly after this the cooperation between the forward sealing member 6 and the organ 16 ends and the electrode protrudes again in the liquid to do its job.

An additional advantage of the invention is, that in the position of fig. 2 a sluice chamber is formed between the sealing members 6 and 8. The liquid quantity contained in this chamber can be monitored by the electrode to check any measurable process in the sample. Afterwards the sample can be re-introduced in the process vessel or be removed in the position of fig. 3 by venting through the ducts 23 and 24.

## Claims

1. Device for retaining an electrode holder (3) which is adapted to hold an electrode (2) with protruding measuring part (1) and is displacable in longitudinal direction with respect to a bore (20,21,22) in one or more organs (16,17), wherewith at the side turned away from the measuring part of the electrode a back sealing member (7) is present, which with displacement of the electrode holder with respect to the bore maintains a seal between them, which electrode holder at the side of the measuring part (1) is provided with a closing cap (5) cooperating with a forward sealing member (6), which in a withdrawn position (fig. 3) of the electrode holder realizes a seal between the closing cap (5) and the bore, in which position the measuring part (1) is located in a sluice chamber linked with connection ducts (23,24), the electrode holder being movable with respect to the said organs (16,17) from a work position into the withdrawn position, characterized in that between the back sealing member (7) and the forward sealing member (6) an intermediate sealing member (8) is provided which is mounted to either one of the said organs (16,17) or the electrode holder (3) and cooperates with a surface of the electrode holder (3) or the bore (20,21,22) respectively, the said surface being shaped such, that in the reach from the work position (fig.1) until an intermediate position (fig.2) the intermediate sealing member (8) realizes a seal between the bore (20) and the electrode holder (3), that in the said intermediate position the forward sealing member (6) forms a seal with the bore (20), such, that in the said intermediate position a closed chamber is formed between the forward (6) and the intermediate (8) sealing members, which chamber contains the said measuring part (1) of the electrode and that in the withdrawn position no seal is realized by the intermediate sealing member (8), but the forward sealing member (6) remains in sealing relation with the bore (20).

2. Device according to claim 1, characterized in that in the reach in which the intermediate sealing member (8) is in the withdrawn position (fig. 3), either the bore (at 21) has a larger diameter than at its end or the electrode holder (3) has a smaller diameter than at its end.

3. Device according to claim 1, characterized in that in the work position (fig. 1) the intermediate sealing member (8) is located at the end of the bore, where it debouches into a process vessel (25).

4. Device according to claim 1, 2 or 3, characterized in that the bore (20,21,22) at its end (20) debouching into a process vessel (25) or the electrode holder at its process side have a constant diameter over a length aproximately equalling the axial distance between the forward (6) and and the intermediate (8) sealing members.

5. Device according to one or more of the preceding claims, characterized in that the forward sealing member (6) is an O-ring located in an outwardly open groove having a width which is greater than the thickness of the O-ring.

6. Device according to one or more of the preceding claims, characterized in that the intermediate sealing member (8) is an O-ring, located in an outwardly open groove having a width which is greater than the thickness of the O-ring.

7. Device according to one or more of the preceding claims, characterized in that the intermediate sealing member (8) in the measuring position engages the edging, which is formed between the bore (20) and the local surface (27) of the vessel to which the device is mounted.

**Patentansprüche**

1. Vorrichtung zum festhalten eines Elektrodenhalters (3), der eingerichtet ist eine Elektrode (2) mit ausstreckendem Messteil (1) festzuhalten und versetzbar ist in der Längerichtung hinsichtlich einer Bohurung (20,21,22) in einem oder mehreren Organen (16,17), wobei an der Seite die abliegt vom Messteil der Elektrode ein Hinterabdichtteil (7) anwesend ist, der bei Versetzung des Elektrodenhalters hinsichtlich der Bohrung eine Dichtung zwischen ihnen beibehaltet, welcher Elektrodenhalter an der Seite des Messteils (1) mit einer Abschliessungshaube (5) versehen ist mit einem Vorderabdichtteil (6), der in der zurückgezogenen Lage (Fig. 3) des Elektrodenhalters eine Abdichtung zwischen der Abschliesshaube (5) and der Bohrung realisiert, in welcher Lage der Messteil (1) sich in einer Schleusekammer, die mit Verbindungsleitungen (23,24) gekuppelt ist, befindet, wobei der Elektrodenhalter bewegbar ist hinsichtlich der genannten Organe (16,17) von einer Arbeitsstelle in der zurückgezogenen Stelle, dadurch gekennzeichnet, dass zwischen dem Hinterabdichtteil (7) und dem Vorderabdichtteil (6) einen Zwischenabdichtteil (8) angeordnet ist, der entweder an einem der Organe (16,17) oder dem Elektrodenhalter (3) befestigt ist und mit einer Oberfläche des Elektrodenhalters (3) bezugsweise dem Bohrung (20,21,22) zusammenarbeitet, wobei die genannte Oberfläche derart geformt ist, dass im Bereich von der Arbeitslage (Fig. 1) bis eine Zwischenlage (Fig. 2) der Zwischenabdichtteil (8) eine Abdichtung zwischen der Bohrung (20) und dem Elektrodenhalter (3) realisiert, dass in der genannten Zwischenlage der Vorderabdichtteil (6) eine Abdichtung mit der Bohrung (20) formt, derart, dass in der genannten Zwischenlage eine geschlossene Kammer zwischen dem Forderabdichtteil (6) und dem Zwischenabdichtteil (8) gebildet wird, welche Kammer den genannten Messteil (1) der Elektrode enthält und dass in der zurückgezogene Lage keine Abdichtung realisiert wird durch dem Zwischenabdichtteil (8), der Forderabdichtteil (6) jedoch in abdichtender Beziehung zu der Bohrung (20) verbleibt.

2. Vorrichtung nach Anspruch 1, dadurch gekennzeichnet, dass im Bereich in welchem der Zwischenabdichtteil (8) in der zurückgezogenen Lage ist (Fig. 3), entweder die Bohrung (bei 21) einen grösseren Durchmesser als bei ihrem Ende hat oder der Elektrodenhalter (3) einen kleineren Durchmesser als bei seinem Ende hat.

3. Vorrichtung nach Anspruch 1, dadurch gekennzeichnet, dass in der Arbeitslage (Fig. 1) der Zwischenabdichtteil (8) sich am Ende der Bohrungbefindet, wo diese in einem Prozessgefäss mündet.

4. Vorrichtung nach Anspruch 1, 2 oder 3, dadurch gekennzeichnet, dass die Bohrung (20,21,22) an seinem Ende (20), das in das Prozessgefäss (25) mündet oder der Elektrodenhalter an seiner Prozessseite einen konstanten Durchmesser haben über eine Länge, die annäherungsweise die axiale Entfernung zwischen dem Vorderabdichtteil (6) und dem Zwischenabdichtteil (8) gleich ist.

5. Vorrichtung nach einem oder mehreren der vorangehenden Ansprüche, dadurch gekennzeichnet, dass der Vorderabdichtteil (6) einen O-Ring ist, der in einer nach Aussen offenen Nut liegt mit einer Breite, die grösser ist als die Dicke des O-Rings.

6. Vorrichtung nach einem oder mehreren der vorangeheden Ansprüche, dadurch gekennzeichnet, dass der Zwischenabdichtteil (8) einen O-Ring ist, der in einer nach Aussen offenen Nut liegt mit einer Breite die grösser ist als die Dicke des O-Rings.

7. Vorrichtung nach einem oder mehreren der vorangehenden Ansprüche, dadurch gekennzeichnet, dass in der Messlage der Zwischenabdichtteil (8) einen Rand berührt, der zwischen der Bohrung (20) und der ortlichen Oberfläche (27) des Gefässes an dem die Vorrichtung montiert ist, liegt.

**Revendications**

1. Dispositif d'appui pour fixation d'électrode (3) qui est conçu pour fixer une électrode (2) à une partie de mesure en saillie (1) et qui peut se déplacer dans une direction longitudinale par rapport à un alésage (20, 21, 22) prévu dans une ou plusieurs pièces (16, 17), dans lequel du côté opposé à la partie de mesure de l'électrode se trouve un élément d'étanchéité arrière (7), lequel au cours du déplacement de la fixation d'électrode par rapport à l'alésage maintient une étanchéité entre eux, laquelle fixation d'électrode du côté de la partie de mesure (1) porte un bouchon de fermeture (5) qui coopère avec un élément d'étanchéité avant (6), lequel dans une position de retrait (figure 3) de la fixation d'electrode assure l'étanchéité entre le bouchon de fermeture (5) et l'alésage, alors que dans cette position la partie de mesure (1) est placée dans une chambre de vanne reliée à des conduits de liaison (23, 24), la fixation d'électrode étant mobile par rapport auxdites pièces (16, 17) entre une position de service et une position de retrait, caractérisé en ce que, entre l'élément d'étanchéité arrière (7) et l'élément d'étanchéité avant (6), se trouve un élément d'etanchéite intermédiaire (8) qui est monté soit sur l'une, soit sur l'autre des pièces (16, 17) ou sur la fixation d'électrode (3) et qui coopère respectivement avec une surface de la fixation d'électrode (3) ou avec l'alésage (20, 21, 22), ladite surface étant profilée de manière qu'au passage entre la position de travail (figure 1) et une position intermédiaire (figure 2) l'élément d'étanchéité intermédiaire (8) assure l'étanchéité entre l'alésage (20) et la fixation d'électrode (3), en ce que dans ladite position intermédiaire l'élément d'étanchéité avant (6) réalise l'étanchéité avec l'alésage (20), de telle sorte que dans ladite position intermédiaire une chambre fermée soit constituée entre lesdits éléments d'étanchéité avant (6) et d'étanchéité intermédiaire (8), laquelle chambre contient ladite partie de mesure (1) de l'électrode et en ce que dans la position de retrait aucune étanchéité n'est réalisée par l'élément d'étanchéité intermédiaire (8) mais que l'élément d'étanchéité avant (6) reste en relation d'étanchéité avec l'alésage (20).

2. Dispositif selon la revendication 1, caractérisé en ce que sur le trajet au cours duquel l'élément d'étanchéité intermédiaire (8) se trouve dans la position de retrait (figure 3), soit l'alésage (en 21) a un diamètre supérieur à celui de son extrémité, soit la fixation d'électrode (3) a un diamètre inférieur à celui de son extrémité.

3. Dispositif selon la revendication 1, caractérisé en ce que dans la position de travail (figure 1) l'élément d'étanchéité intermédiaire (8) est disposé à l'extrémité de l'alésage, dnas laquelle il débouche dans une cuve de processus (25).

4. Dispositif selon les revendications 1, 2 ou 3, caractérisé en ce que l'alésage (20, 21, 22) à son extrémité (20) débouchant dans une cuve de processus (25) ou la fixation d'électrode sur son côte processus ont un diamètre constant sur une longueur sensiblement égale à la distance axiale entre les éléments d'étanchéité avant (6) et intermédiaire (8).

5. Dispositif selon l'une ou plusieurs des revendications précédentes, caractérisé en ce que l'élément d'étanchéité avant (6) est un joint torique placé dans une rainure ouverte vers l'extérieur ayant une largeur qui est supérieure à l'épaisseur du joint torique.

6. Dispositif selon l'une ou plusieurs des revendications précédentes, caractérisé en ce que l'élément d'étanchéité intermédiaire (8) est un joint torique placé dans une rainure ouverte vers l'extérieur ayant une largeur supérieure à l'épaisseur du joint torique.

7. Dispositif selon l'une ou plusieurs des revendications précédentes, caractérisé en ce que l'élément d'étanchéité intermédiaire (8) dans la position de mesure vient en prise avec la bordure qui est formée entre l'alésage (20) et la surface locale (27) de la cuve sur laquelle le dispositif est monté.

Fig. 1

Fig. 2

Fig. 3